# EUROPÄISCHE PATENTSCHRIFT

(11) **EP 2 561 745 B1**
(45) Veröffentlichungstag und Bekanntmachung des Hinweises auf die Patenterteilung: **28.12.2016**
(21) Anmeldenummer: 12171425.7
(22) Anmeldetag: 11.06.2012
(51) Int. Cl.: A01D 43/073, A01D 43/08

(54) **Landwirtschaftliche Erntemaschine**
Agricultural harvester
Moissonneuse agricole

(30) Priorität: 24.08.2011 DE 102011052944
(43) Veröffentlichungstag der Anmeldung: 27.02.2013
(73) Patentinhaber: CLAAS Selbstfahrende Erntemaschinen GmbH, 33428 Harsewinkel (DE)
(72) Erfinder: Hartmann, Ralf, 49324 Melle (DE)

(56) Entgegenhaltungen:
- EP-A1- 1 145 616
- EP-A1- 1 380 204
- EP-A1- 1 574 122
- EP-A1- 1 752 037

## Beschreibung

Die Erfindung betrifft eine landwirtschaftliche Erntemaschine gemäß dem Oberbegriff des Patentanspruchs 1 sowie ein Verfahren gemäß dem Oberbegriff des Patentanspruchs 9.

Landwirtschaftliche Erntemaschinen, insbesondere selbstfahrende Feldhäcksler ernten bei der Erntefahrt Pflanzen vom Feld, zerkleinern diese mittels verschiedener Arbeitsaggregate und werfen das verarbeitete Erntegut schließlich durch eine als Auswurfkrümmer bezeichnete Überladeeinrichtung in einen mit dem Feldhäcksler mitfahrenden Ladebehälter aus. Der Ladebehälter kann sich beispielsweise auf einem Anhänger befinden, der von einem Schlepper gezogen wird.

Zum gezielten Auswurf in den Transportbehälter unter unterschiedlichen Ladebedingungen, insbesondere bei unterschiedlichen zu überbrückenden Ladeabständen z.B. während des Wechsels von Transportbehältern, bei Kurvenfahrt, bei Hangneigung oder sonstiger Umstände, ist die Überladeeinrichtung beweglich gegenüber dem Maschinenrahmen des Feldhäckslers gelagert und lässt sich durch Neigung um eine horizontale Achse in der Höhe verstellen. Meist ist am maschinenabgewandten Ende der Überladeeinrichtung weiterhin eine bewegliche Krümmerklappe vorgesehen, durch die sich gezielt der Abwurfwinkel des Ernteguts gegenüber der Horizontalebene beeinflussen lässt. Die genannten Verstellungen an der Überladeeinrichtung werden jeweils von entsprechend ausgeführten Aktoren umgesetzt, die vom Bediener des Feldhäckslers fernbetätigbar sind. Unter anderem dienen die Verstellmöglichkeiten dazu, eine gewünschte Wurfweite, d.h. den Abstand vom Ansatz der Überladeeinrichtung am Feldhäcksler bis zum Auftreffpunkt auf dem Transportbehälter beeinflussen zu können.

Die zum Auswerfen des Ernteguts erforderliche kinetische Energie wird durch zumindest ein Förderorgan aufgebracht. Hierbei handelt es sich bei Feldhäckslern insbesondere um einen im Förderschacht, dem Häckselaggregat in Bezug auf die Erntegutförderrichtung nachgeordneten Nachbeschleuniger, der das Erntegut vor Eintritt in die Überladeeinrichtung zusätzlich beschleunigt. Allgemein bringen aber auch andere Arbeitsaggregate eines Feldhäckslers, beispielsweise Einzugsaggregat, Häckselaggregat, Konditioniereinrichtung, bereits kinetische Energie in das Erntegut ein, da sie das Gut - unter anderem - beschleunigen. In jedem Fall verhindert die kinetische Energie des Ernteguts, dass sich das Erntegut im aufsteigenden Förderschacht bzw. in der Überladeeinrichtung aufstaut und diese verstopft. So hat die kinetische Energie des Ernteguts - neben dem Zustand der Überladeeinrichtung (s.o.) - großen Einfluss auf die erzielte Wurfweite.

EP 1574122 offenbart eine Erntemaschine mit den Merkmalen des Oberbegriffs der Ansprüche 1 und 9.

In der EP 1 380 204 wird ein Förderorgan in Form eines Nachbeschleunigers für einen selbstfahrenden Feldhäcksler beschrieben, mit dem sich die Beschleunigung des Ernteguts während des Erntebetriebs verstellen lässt. Dazu lässt sich eine Spaltweite des Nachbeschleunigers durch Bewegung der Nachbeschleunigertrommel gegenüber dem ummantelnden Maschinengehäuse verändern. Die Verstellung erfolgt in Abhängigkeit von Erntegutparametern wie der Dichte, Feuchte und/oder Geschwindigkeit des Ernteguts mit dem Ziel, auch bei unterschiedlicher Erntegutbeschaffenheit einen sicheren Erntegutfluss sicherzustellen. Eine sich durch die Spaltverstellung verändernde Wurfweite wird dabei nicht thematisiert.

In der EP 1 752 037 wird zum Zweck eines energieeffizienteren Überladens in den Ladebehälter eines Transportfahrzeugs die Beschleunigung des Ernteguts abhängig von der Wurfweite in den Ladebehälter eingestellt. Damit soll einerseits erzielt werden, dass das Erntegut bei großen Überladeabständen eine hohe Geschwindigkeit erhält, um einen Zielpunkt in dem entfernten Ladebehälter sicher zu erreichen. Im Fall eines kurzen Überladeabstands wird andererseits auf eine unnötige Beschleunigung des Ernteguts verzichtet, um Energie einzusparen. Die Änderung der Beschleunigung wird also jeweils zur Erzielung unterschiedlicher Wurfweiten vorgenommen. Steigerungen der Effizienz des Überladevorgangs bei gleicher Wurfweite sind jedoch nicht Gegenstand der EP 1 752 037.

Es ist eine Aufgabe der vorliegenden Erfindung, eine Erntemaschine der eingangs genannten Art anzugeben, die unter Gewährleistung eines erntegutverlustarmen Überladevorgangs in weiterem Maße zur Einsparung von Energie beiträgt. Ein auf einen entsprechenden Zweck gerichtetes Verfahren zum Überladen von Erntegut soll angegeben werden.

Die Aufgabe wird gelöst durch eine Erntemaschine gemäß Patentanspruch 1.

Der damit beanspruchten Lehre liegt die erfindungsgemäße Erkenntnis zugrunde, dass es beim Überladen von Erntegut, das durch eine Überladeeinrichtung ausgeworfen wird, unter Energieeffizienzaspekten vorteilhaft sein kann, das Erntegut insbesondere bei mittleren und großen Wurfweiten statt mit einer flachen, annähernd geraden Flugbahn (und dazu nötiger hoher Wurfleistung) mit einer stärker bogenförmigen Flugbahn (und demgegenüber reduzierter Wurfleistung) in den Ladebehälter zu werfen. Eine stärker bogenförmige Flugbahn ergibt sich aus einem steileren Abwurfwinkel des Ernteguts aus der Überladeeinrichtung. Alternativ oder ergänzend kann es unter Energieeffizienzaspekten vorteilhaft sein, das Erntegut aus einer größeren Abwurfhöhe aus der Überladeeinrichtung austreten zu lassen, um wiederum mit reduzierter Wurfleistung eine gleiche Wurfweite zu erzielen. Beide Maßnahmen - für sich gesehen oder kombiniert - bewirken, dass sich eine gleiche Wurfweite mit verringerter Beschleunigung des Ernteguts erzielen lassen. Für den Überladevorgang wird daher weniger Energie benötigt.

Die erfindungsgemäße Erntemaschine unterstützt auf vorteilhafte Weise die Herbeiführung eines solchen energetisch günstigen Überladezustands, indem diese über eine Steuerungseinrichtung verfügt, die betreibbar ist, eine durch veränderte Beschleunigung des Ernteguts verursachte Änderung der Wurfweite des Ernteguts durch Ansteuerung des zumindest einen Aktors der Überladeeinrichtung auszugleichen. Erfindungsgemäß ist es damit möglich, die Erntemaschine mit einer für die jeweils erforderliche Wurfweite reduzierten Beschleunigung im Förderorgan zu betreiben, wobei aufgrund der ausgleichenden Zustandsanpassung der Überladeeinrichtung Erntegutverluste vermieden werden, die herkömmlich bei einer bloßen Verstellung der Beschleunigung aufgrund der damit schlagartig veränderten Wurfweite aufträten. Praktisch ausgedrückt, sorgt die Steuerungseinrichtung dafür, dass bei einer Änderung der Beschleunigung des Ernteguts der Erntegutstrahl weiterhin den Ladebehälter trifft. Durch den zumindest einen Aktor vorzunehmende Zustandsänderungen der Überladeeinrichtung können dabei insbesondere in einer Lageänderung (Höhenänderung) und/oder einer Änderung des Abwurfwinkels und/oder einer Änderung der Länge (z.B. bei teleskopierbarem Auswurfkrümmer) der Überladeeinrichtung bestehen.

Bei selbstfahrenden Erntemaschinen wie Feldhäckslern wird das Erntegut in unterschiedlichen Arbeitsaggregaten beschleunigt. Die für den Auswurf durch die Überladeeinrichtung erreichte Geschwindigkeit des Ernteguts wird maßgeblich zumeist durch ein als Nachbeschleuniger bezeichnetes Förderorgan beeinflusst. Ein solcher - für sich gesehen bekannter - Nachbeschleuniger bietet abhängig von dessen Bauart den Vorteil, dass sich die damit erzielte Beschleunigung des Ernteguts einfach und unabhängig von anderen Arbeitsaggregaten verändern lässt. Dies kann erfolgen durch eine Verstellung einer Drehzahl und/oder Spaltweite und/oder einer Schaufelstellung und/oder einer Luftzuführung des Nachbeschleunigers. Die jeweilige Verstellung kann vorteilhaft mittels eines Motors oder sonstigen Aktors entweder vom Maschinenbediener fernbetätigt werden und/oder ebenfalls von der Steuereinrichtung ausgelöst werden. Vorteilhaft übermittelt ein dem Nachbeschleuniger zugeordneter Sensor das jeweilige Stellmaß an die Steuerungseinrichtung.

Zur Unterstützung des automatisierten Betriebs ist die Steuerungseinrichtung vorteilhaft mit einer Einrichtung gekoppelt, welche die erzielte Wurfweite erfasst, diese also quantitativ ermitteln kann. Anhand der Kenntnis über die jeweils tatsächlich erzielte Wurfweite findet damit eine Rückkopplung statt, anhand derer die Steuerungseinrichtung entscheiden kann, ob und in welcher Weise bzw. in welchem Maße der Zustand der Überladeeinrichtung zu verändern ist, um die veränderte Beschleunigung schnellstmöglich zu kompensieren.

Die erzielte Wurfweite kann auf unterschiedliche Weise erfasst werden. Gemäß einer möglichen Ausführung wird die erzielte Wurfweite anhand bekannter Parameter der Erntemaschine (eingestellte Beschleunigung im Förderorgan, Zustand der Überladeeinrichtung) und ggf. Parametern des Ernteguts (Erntegutfeuchte, -art, -beschaffenheit) von der Steuerungseinrichtung ermittelt. Eine vorteilhafte Weiterbildung sieht vor, dass die Einrichtung zur Erfassung der Wurfweite einen optischen Sensor, insbesondere eine Kamera umfasst. Die Kamera ist zweckmäßigerweise an der Erntemaschine und/oder am Ladebehälter angebracht und so ausgerichtet, dass diese den Auftreffpunkt des ausgeworfenen Ernteguts im Ladebehälter erfasst. Anhand einer - für sich gesehen bekannten - elektronischen Auswertung des Bildes kann die Einrichtung dann die erzielte Wurfweite quantitativ ermitteln. Eine Wurfweitenüberprüfung ist damit möglich.

Erfindungsgemäß steuert die Steuerungseinrichtung zumindest einen Aktor an, um einen Zustand der Überladeeinrichtung - zum Ausgleich der Wurfweite - zu verändern. Zweckmäßigerweise handelt es sich hierbei um einen Aktor, dessen Betätigung die Überladeeinrichtung in einen Zustand mit veränderter Wurfweite versetzt. Dies ist beispielsweise ein Aktor zur Höhenverstellung der Überladeeinrichtung und/oder ein Aktor zur Veränderung eines Abwurfwinkels der Überladeeinrichtung und/oder ein Aktor zur Veränderung der Länge der Überladeeinrichtung.

Zum Erhalt einer Rückkopplung über die vorgenommene Ansteuerung ist bevorzugt jedem Aktor ein Sensor zugeordnet. Hierbei handelt es sich beispielsweise um einen Sensor zur Erfassung der Höhenstellung der Überladeeinrichtung und/oder einen Sensor zur Erfassung des Abwurfwinkels der Überladeeinrichtung, wobei die Steuerungseinrichtung die Signale des jeweiligen Sensors empfängt.

Die mit der Steuerungseinrichtung durchführbare Ansteuerung zur Wurfweitenkompensation kann unterschiedlich gestaltet sein. Vorteilhaft lässt sich diese mittels einer mit der Steuerungseinrichtung verbundenen Betätigungseinrichtung aktivieren und deaktivieren. Der Maschinenbediener kann damit frei entscheiden, ob und wann die unterstützende Funktion genutzt werden soll.

Die Aufgabe wird weiterhin gelöst durch ein Verfahren gemäß Patentanspruch 9.

Erfindungsgemäß zeichnet sich das Verfahren dadurch aus, dass eine durch eine veränderte Beschleunigung verursachte Änderung der Wurfweite des Ernteguts durch eine Veränderung eines Zustands der Überladeeinrichtung ausgeglichen wird. Mit dem Verfahren werden entsprechende Wirkungen und Vorteile wie mit der erfindungsgemäßen Erntemaschine erzielt, weshalb zur Vermeidung von Wiederholungen auf diesbezügliche vorige Ausführungen verwiesen wird.

Die veränderte Beschleunigung des Ernteguts kann dabei ganz allgemein manuell vom Maschinenbediener und/oder automatisiert verändert werden, wobei dies bevorzugt jeweils mit dem Zweck geschieht, einen energieeffizienten Überladevorgang durchzuführen. Ganz allgemein könnte das Verfahren aber auch dazu dienen auf veränderte Beschleunigungen des Ernteguts zu reagieren, die sich aufgrund sonstiger Ursachen wie beispielsweise unerwünschter Schwankungen des Antriebs des Förderorgans (z.B. im Überlastungsfall des Hauptantriebs der Erntemaschine) ergeben. Eine zuvor eingestellte Wurfweite ließe sich auf diesem Wege vorteilhaft aufrechterhalten.

Gemäß einer vorteilhaften Weiterbildung des Verfahren werden dabei im Rahmen einer Ablaufroutine die folgenden Verfahrensschritte durchlaufen:
a) Erkennen einer erzielten ursprünglichen Wurfweite,
b) Überprüfung, ob sich die erkannte Wurfweite mit einer reduzierten Beschleunigung erzielen lässt, wobei im Fall von Reduzierungspotential die folgenden Maßnahmen erfolgen:
c) Vorgabe einer reduzierten Beschleunigung des Ernteguts,
d) Vorgabe eines veränderten Zustands der Überladeeinrichtung, um die ursprüngliche Wurfweite zu erzielen.

Es sei angemerkt, dass insbesondere die Schritte c) und d) sowohl nacheinander (sukzessive) als auch zeitlich nebeneinander (parallel) erfolgen können. Im Fall einer sukzessiven Abarbeitung ist eine einfache und damit sichere Beherrschung der Ansteuerung gegeben. Dabei könnten die Schritte c) und d) alternativ auch in umgekehrter Reihenfolge [d.h. erst d) dann c)] aufeinander folgen. Indem zuerst ein veränderter Zustand der Überladeeinrichtung und erst danach eine reduzierte Beschleunigung vorgegeben wird, könnten beispielsweise Verstopfungen im Förderschacht vermieden werden. Im Unterschied kann eine zeitlich parallele (synchrone) Durchführung der genannten Schritte zu einem schnelleren Ergebnis führen. Die einzelnen Schritte werden von der Steuerungseinrichtung bevorzugt im Sinne eines Programmablaufs abgearbeitet.

Vorteilhaft werden die Schritte b) bis d) so häufig wiederholt, bis eine zur Erzielung der ursprünglichen Wurfweite minimale Beschleunigung erreicht ist. Durch die so vorgenommene Iteration wird auf dem Wege wiederholter Verstellung und Überprüfung ein energetisch optimaler Überladezustand erreicht.

Bevorzugt werden die in den Verfahrensschritten c) und d) vorgesehenen Maßnahmen jeweils in festlegbaren Stellweiten vorgenommen. Die jeweiligen Verstellungen der

Überladeeinrichtung erfolgen demnach in jedem Verfahrensschritt nur in definierbar begrenztem Maß, was für den Überladevorgang den Vorteil bietet, dass sich der Auftreffpunkt des Ernteguts im Ladebehälter nicht zu plötzlich und/oder zu sprunghaft ändert, was zu Erntegutverlusten führen könnte. Die gewünschte Stellweite ist vorteilhaft vom Maschinenbediener vorgebbar.

Gemäß einer möglichen Weiterbildung des Verfahren werden die in den Schritten c) und d) der Ablaufroutine vorgesehenen Vorgaben beispielsweise im Sinne einer Empfehlung und/oder zur Information an einen Maschinenbediener ausgegeben. Dies kann den Vorteil haben, dass der Maschinenbediener entsprechende Maschineneinstellungen nach freiem Ermessen vornehmen kann. Die Ausgabe kann optisch auf einer Anzeigeeinheit oder akustisch über einen Lautsprecher in der Fahrerkabine erfolgen.

Ergänzend oder alternativ zu einer Ausgabe der Vorgaben kann die Ablaufroutine nach einer Aktivierung durch den Maschinenbediener (beispielsweise per Knopfdruck) selbsttätig ablaufen, wobei die Steuerungseinrichtung die in den Schritten c) und d) vorgegebenen Maschineneinstellungen selbsttätig vornimmt. Die Reduzierung der Beschleunigung sowie der Ausgleich der Wurfweite erfolgen in diesem Fall vollautomatisch.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: einen erfindungsgemäßen selbstfahrenden Feldhäcksler in schematischer Seitenansicht,
- Fig. 2: eine schematische Seitenansicht eines Überladevorgangs bei flachem Auswurf,
- Fig. 3: eine schematische Seitenansicht eines Überladevorgangs bei bogenförmigem Auswurf.

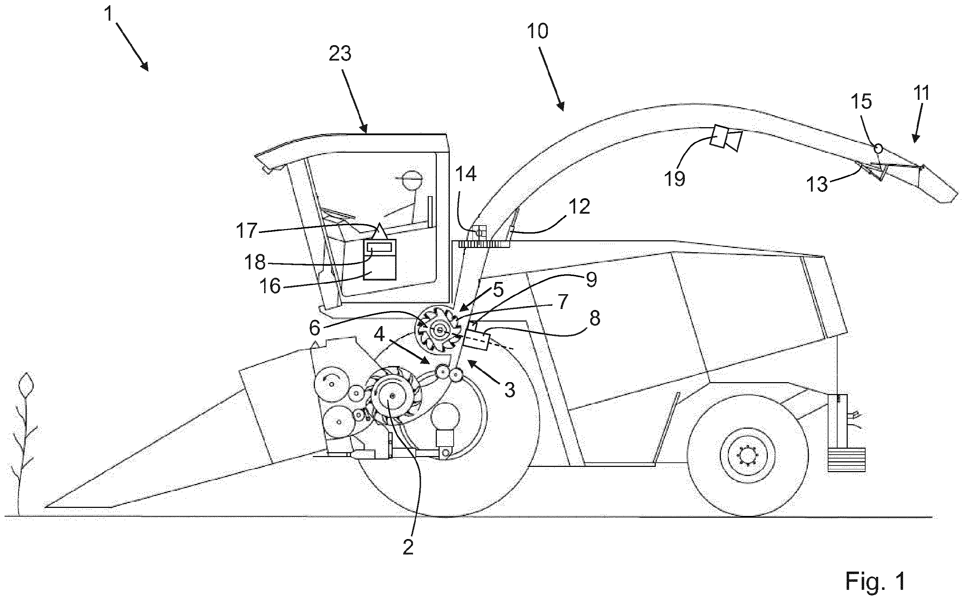

Fig. 1 zeigt ein Ausführungsbeispiel einer erfindungsgemäßen landwirtschaftlichen Erntemaschine in Form eines selbstfahrenden Feldhäckslers 1 in schematischer Seitenansicht. Während der Erntefahrt schneidet der Feldhäcksler 1 mittels eines (nicht bezeichneten) Vorsatzgeräts Pflanzen vom Feld, um das geerntete Pflanzenmaterial über Einzugsorgane (nicht bezeichnet) einem Häckselaggregat 2 zuzuführen. Dort wird das Erntegut auf für sich bekannte Weise zerkleinert und gelangt in einen Förderschacht 3, der sich vom Häckselaggregat 2, das unterhalb einer Fahrerkabine 23 angeordnet ist, mit aufsteigendem Verlauf in einen Bereich hinter der Fahrerkabine 23 erstreckt und in eine Überladeeinrichtung 10 mündet.

Im Förderschacht 3 ist eine Konditioniereinrichtung 4 angeordnet. Ein Nachbeschleuniger 5 ist dieser Konditioniereinrichtung 4 in Bezug auf die Gutstromrichtung nachgeordnet. Der Nachbeschleuniger 5 umfasst eine mit einer Vielzahl von Schaufeln 7 bestückte Nachbeschleunigertrommel 6, die drehantreibbar gelagert ist, um Erntegut, das durch den Förderschacht 3 in den Wirkungsbereich der Schaufeln 7 gelangt, in Gutstromrichtung durch einen von den Schaufeln 7 erzeugten Luftstrom zu beschleunigen. Die Rotationsachse der Nachbeschleunigertrommel 6 ist mittels eines Stellmotors 8 verschiebbar (angedeutet durch die gestrichelte Linie), so dass ein zwischen den Schaufeln 7 und der Rückwand des Nachbeschleunigers (entspricht im Bild der rechten Kante des Förderschachts 3) gebildeter Nachbeschleunigerspalt motorisch verstellbar ist. Da die Nachbeschleunigertrommel 6 unter anderem zusammen mit dem Häckselaggregat 2 angetrieben wird, ist über die realisierte Spaltmaßverstellbarkeit - trotz gleichbleibender Antriebsdrehzahl - eine Möglichkeit der Einflussnahme auf die im Nachbeschleuniger 5 ausgeübte Beschleunigung des Ernteguts geschaffen. Ein Spaltmaßsensor 9 kann vorgesehen sein, um das eingestellte Spaltmaß zu erfassen, das bei bekannter Drehzahl Maß für die Beschleunigung des Nachbeschleunigers 5 ist. Für einen Fachmann versteht sich, dass auch andere bzw. anders gestaltete Förderorgane als der gezeigte Nachbeschleuniger 5 eine veränderliche Beschleunigung des Ernteguts bewirken können und damit im Rahmen der Erfindung liegen.

Die als Auswurfkrümmer 10 ausgeführte Überladeeinrichtung ist (unter anderem) höhenverschwenkbar gegenüber dem Rahmen des Feldhäckslers 1 gelagert. Ein zwischen Rahmen und Auswurfkrümmer 10 wirkender Hubzylinder 12 dient zur Verstellung der Höhe des Auswurfkrümmers 10. Ein Höhensensor 14, beispielsweise ein Drehpotentiometer, erfasst den jeweils eingestellten Höhenschwenkwinkel.

Am maschinenabgewandten Ende des Auswurfkrümmers 10 ist eine Auswurfklappe 11 angeordnet, durch deren Verschwenkbarkeit sich der Auswurfwinkel des Ernteguts aus dem Auswurfkrümmer 10 beeinflussen lässt. Die Verstellung wird durch einen Stellzylinder 13 bewirkt, wobei ein der Auswurfklappe 11 zugeordneter Winkelsensor 15 die Klappenstellung erfasst. Beispielsweise in Kombination mit dem erfassten Höhenschwenkwinkel des Auswurfkrümmers (Sensor 14) lässt sich aus der Winkelstellung der Auswurfklappe 11 der Auswurfwinkel gegenüber der Horizontalebene errechnen.

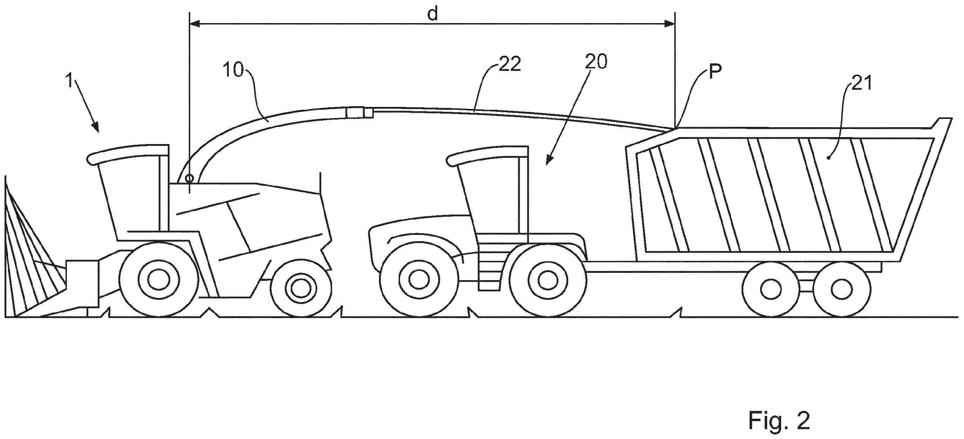

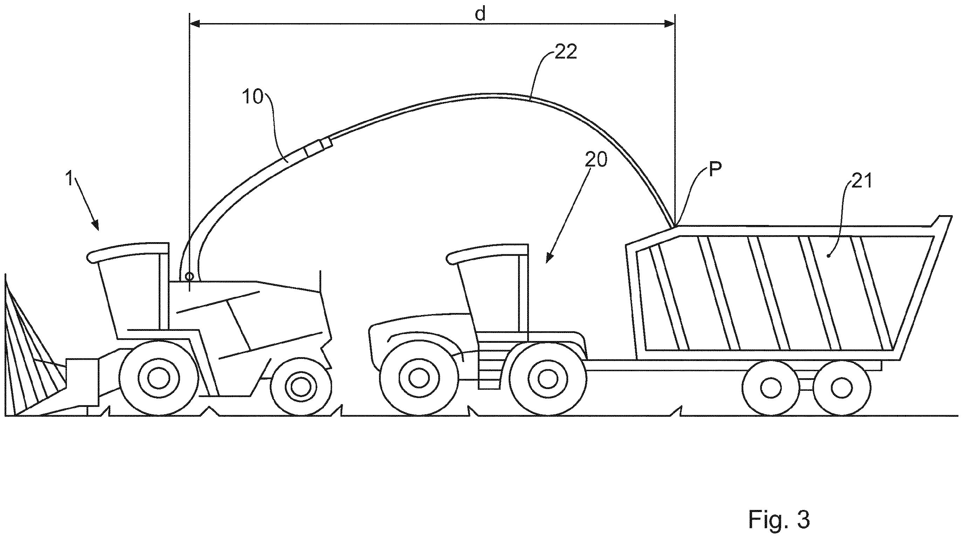

Zur optischen Erfassung eines erreichten Auftreffpunkts ("P", vgl. Fig. 2 und 3) des im Erntebetrieb ausgeworfenen Ernteguts ist am Auswurfkrümmer 10 eine auf einen Wurfzielbereich des Auswurfkrümmers 10 ausgerichtete Kamera 19 angebracht.

In der Fahrerkabine 23, die Platz für einen Maschinenbediener bietet, ist eine Steuerungseinrichtung 16 angeordnet, bei der es sich um einen digitalen Signalprozessor handelt. Der Steuerungseinrichtung 16 sind eine optische Ausgabeeinheit 18 zur Anzeige von Vorgabeinformationen an den Maschinenbediener und ein Schalter 17 zur Aktivierung und Deaktivierung der erfindungsgemäßen Steuerung zugeordnet. Die Steuerungseinrichtung 16 ist über - aus Übersichtsgründen nicht dargestellte - Signalleitungen mit Aktoren der Überladeeinrichtung 10 wie dem Hubzylinder 12 und dem Stellzylinder 13 und mit Sensoren wie dem Spaltmaßsensor 9, dem Höhensensor 14, dem Winkelsensor 15 und der Kamera 19 verbunden. Für einen Fachmann versteht sich, dass auch andere bzw. ergänzende Aktoren und Sensoren im Rahmen der Erfindung zum Einsatz kommen können.

Die Wirkungsweise des erfindungsgemäßen Feldhäckslers 1 sei nun anhand der Fig. 2 und 3 erläutert, in denen ein Überladevorgang von einem Feldhäcksler 1 in einen von einem Schlepper 20 gezogenen Ladebehälter 21 in unterschiedlichen Situationen gezeigt ist. Bei dem in den Fig. 2 und 3 gezeigten, zur Übersicht vereinfacht dargestellten Feldhäcksler 1 handelt es sich um den Feldhäcksler 1 gemäß Fig. 1. Zu Erläuterungen einzelner daran vorhandener Merkmale sei daher auf die bereits gemachten Ausführungen verwiesen.

Fig. 2 zeigt nun den Feldhäcksler 1 bei der Erntefahrt über ein Feld, gefolgt von einem Schlepper 20, der einen Ladebehälter 21 hinter sich zieht. Erntegut 22 verlässt den Auswurfkrümmer 10 des Feldhäckslers 1 mit einer zur horizontalen Ebene fast parallelen Wurfbahn als annähernd gerader Erntegutstrahl und trifft in einem Auftreffpunkt P in den Ladebehälter 21. Das Erntegut 22 legt dabei vom Ansatz des Auswurfkrümmers 10 am Maschinenrahmen des Feldhäckslers 1 bis zum Auftreffpunkt P im Ladebehälter 21 eine Wurfweite d zurück. Um bei einem derart flachen Abwurfwinkel den Abstand d überbrücken zu können, muss das Erntegut 22 mit sehr hoher Geschwindigkeit aus dem Auswurfkrümmer 10 austreten. Vom Nachbeschleuniger 5 (vgl. Fig. 1) muss daher eine entsprechend hohe Beschleunigung des Ernteguts 22 bewirkt werden, wozu gemäß in Fig. 1 beschriebenem Ausführungsbeispiel die Spaltweite des Nachbeschleunigers 5 auf ein Minimum reduziert wird. Der Überladevorgang ist dementsprechend energieintensiv.

Mit dem erfindungsgemäßen Feldhäcksler 1 bzw. unter Anwendung des erfindungsgemäßen Verfahrens besteht nun die Möglichkeit, einen energetisch günstigeren Überladezustand herbeizuführen, welcher in Fig. 3 schematisch dargestellt ist. Ein solcher Vorgang wird beispielsweise vom Maschinenbediener durch Betätigung des Schalters 17 (vgl. Fig. 1) ausgelöst. Das Auslösen bewirkt, dass die Steuerungseinrichtung 16 (vgl. Fig. 1) im Rahmen einer Ablaufroutine verschiedene Arbeitsschritte durchführt. Demnach fragt die Steuerungseinrichtung 16 zunächst ein Signal der Kamera 19 (vgl. Fig. 1) ab, um anhand einer Bildauswertung die beim Überladevorgang erzielte Wurfweite d zu ermitteln. Alternativ könnte die Wurfweite auch auf anderem Wege ermittelt werden, beispielsweise indirekt durch Berechnung anhand von Maschinenparametern des Feldhäckslers 1, wie der Stellung des Auswurfkrümmers 10 und der Beschleunigung des Ernteguts 22.

Anschließend überprüft die Steuerungseinrichtung 16, ob sich die ermittelte Wurfweite d auch mit einer reduzierten Beschleunigung des Nachbeschleunigers 5 erzielen lässt. Die Steuerungseinrichtung 16 kann bei dieser Überprüfung auch weitere für den Überladevorgang relevante Parameter berücksichtigen wie beispielsweise Eigenschaften (Art, Beschaffenheit, Feuchte, Schnittlänge) des Ernteguts, den Erntegutdurchsatz, die Gutgeschwindigkeit im Auswurfkrümmer, Windverhältnisse etc.. Im bejahenden Fall gibt die Steuerungseinrichtung 16 ein Steuersignal an den Stellmotor 8, um den Spalt des Nachbeschleunigers 5 leicht zu öffnen (zu vergrößern). Die Leistung des Nachbeschleunigers 5 verringert sich, ein reduzierter Energieverbrauch ist die Folge.

Da sich durch alleinige Reduzierung der Beschleunigung des Ernteguts 22 die Wurfweite d sehr schnell verringern würde, käme es zu Erntegutverlusten, wenn der Ladebehälter 21 nicht mehr vom Erntegutstrahl erreicht würde.

Erfindungsgemäß gibt daher die Steuereinrichtung 16 der Überladeeinrichtung 10 einen veränderten Zustand vor, um die ursprüngliche Wurfweite d aufrechtzuerhalten oder zumindest wieder zu erreichen. Die Vorgabe des veränderten Zustands erfolgt durch ein geeignetes Steuersignal an zumindest einen der Aktoren (Hubzylinder 12 und/oder Stellzylinder 13) der Überladeeinrichtung 10. Die Überladeeinrichtung 10 nimmt dadurch schnellstmöglich eine andere Stellung ein, wie beispielhaft in Fig. 3 gezeigt. Die Sensoren 14, 15 geben der Steuerungseinrichtung 16 zur Kontrolle Rückkopplungssignale über den Verstellweg des jeweiligen Aktors 14, 15.

Gemäß der Darstellung in Fig. 3 befindet sich die Überladeeinrichtung 10 in einer gegenüber Fig. 2 angehobenen Stellung, die durch Betätigung des Hubzylinders 12 erreicht wurde. Der Winkel der Auswurfklappe 11 wurde gegenüber Fig. 2 nicht verändert. Durch das Anheben der Überladeeinrichtung 10 tritt das Erntegut 22 mit einem steileren Auswurfwinkel aus und legt eine Wurfbahn zurück, die gegenüber der in Fig. 2 gezeigten Wurfbahn deutlich gekrümmter ist, die jedoch die gleiche Wurfweite d wie in Fig. 2 erzielt, so dass der gleiche Auftreffpunkt P im Ladebehälter 21 erreicht wird. Für den in Fig. 3 dargestellten Überladezustand wird demnach weniger Energie zur Beschleunigung des Ernteguts 22 benötigt als für den in Fig. 2 gezeigten. Zusätzlich ergibt sich der Vorteil, dass das Erntegut 22 im Fall von Fig. 3 mit geringerer Quergeschwindigkeit im Auftreffpunkt P auftrifft. Unerwünschtes Abprallen des Ernteguts vom Auftreffpunkt P nach hinten wird somit zusätzlich vermieden.

Es kann vorgesehen sein, dass die Steuerungseinrichtung 16 nach Erreichen des Zustands in Fig. 3 selbsttätig eine Überprüfung vornimmt, ob sich die Wurfweite d mit einer nochmals reduzierten Beschleunigung des Nachbeschleunigers 5 erzielen lässt. Im bejahenden Fall würden die bereits beschrieben Maßnahmen der Vorgaben einer reduzierten Beschleunigung und der Anpassung der Wurfweite nochmals durchlaufen. Vorteilhaft wiederholt die Steuerungseinrichtung 16 diese Schritte solange, bis der Nachbeschleuniger 5 mit einer minimalen Beschleunigung betrieben wird.

Um durch die Vorgabe der Stellmaßnahmen (reduzierte Beschleunigung, Wurfweitenanpassung) keine Erntegutverluste zu verursachen, kann vorgesehen sein, dass diese jeweils verhältnismäßig kleine Stellschritte beinhalten, so dass sich die Wurfweite d jeweils nur geringfügig ändert und der endgültige Zustand zwar erst nach mehrfacher Wiederholung, dafür jedoch sicher erreicht wird.

Alternativ zu der beschriebenen vollautomatisch durchgeführten Anpassung durch die Steuerungseinrichtung 16 könnten die Vorgabe der reduzierten Beschleunigung des Ernteguts 22 sowie die Vorgabe des angepassten Zustands des Auswurfkrümmers 10 mittels der Ausgabeeinheit 18 im Sinne einer Empfehlung an den Maschinenbediener ausgegeben werden. Der Bediener könnte dann eigens entscheiden, ob er der Empfehlung folgt oder nicht.

Es sei darauf hingewiesen, dass die Überladesituationen von Fig. 2 und 3 lediglich eine beispielhafte Anwendung der Erfindung wiedergeben. Statt einer gezeigten Überladung vom Feldhäcksler 1 nach hinten lässt sich die Erfindung unter Erzielung ähnlicher Vorteile für die seitliche Erntegutüberladung von einem Feldhäcksler einsetzen. Weiterhin sei ergänzt, dass der Ausgleich der Wurfweite d bei anderer Konstellation bzw. anderen Abmessungen der Maschinen neben der gezeigten alleinigen Verstellung mittels des Hubzylinders 12 zusätzlich oder alternativ durch eine Verstellung der Auswurfklappe 11 und/oder durch Verstellung anderer denkbarer (nicht gezeigter) Aggregate erfolgen könnte, welche die Wurfweite d beeinflussen.

**Bezugszeichenliste**

| | | | |
|---|---|---|---|
| 1 | Feldhäcksler | d | Wurfweite |
| 2 | Häckselaggregat | P | Auftreffpunkt |
| 3 | Förderschacht | | |
| 4 | Konditioniereinrichtung | | |
| 5 | Nachbeschleuniger | | |
| 6 | Nachbeschleunigertrommel | | |
| 7 | Schaufel | | |
| 8 | Stellmotor | | |
| 9 | Spaltmaßsensor | | |
| 10 | Auswurfkrümmer | | |
| 11 | Auswurfklappe | | |
| 12 | Hubzylinder | | |
| 13 | Stellzylinder | | |
| 14 | Höhensensor | | |
| 15 | Winkelsensor | | |
| 16 | Steuerungseinrichtung | | |
| 17 | Schalter | | |
| 18 | Ausgabeeinheit | | |
| 19 | Kamera | | |
| 20 | Schlepper | | |
| 21 | Ladebehälter | | |
| 22 | Erntegut | | |
| 23 | Fahrerkabine | | |

## Patentansprüche

1. Landwirtschaftliche Erntemaschine (1) mit zumindest einem Förderorgan (5) zur veränderlichen Beschleunigung von Erntegut (22) und mit einer dem Förderorgan (5) nachgeordneten Überladeeinrichtung (10) zum Auswerfen des Ernteguts (22) in einen Ladebehälter (21), wobei die Überladeeinrichtung (10) mittels zumindest eines Aktors (12, 13) in deren Zustand veränderlich ist, um eine erzielte Wurfweite (d) zu beeinflussen,
**dadurch gekennzeichnet, das**
es sich bei dem Förderorgan um einen Nachbeschleuniger (5) handelt, wobei die Beschleunigung des Ernteguts (22) durch eine Verstellung einer Spaltweite des Nachbeschleunigers (5) steuerbar ist, und durch
eine Steuerungseinrichtung (16), die betreibbar ist, eine durch veränderte Beschleunigung des Ernteguts (22) verursachte Änderung der Wurfweite (d) des Ernteguts (22) durch Ansteuerung des zumindest einen Aktors (12, 13) der Überladeeinrichtung (10) auszugleichen.

2. Erntemaschine nach Anspruch 1, **dadurch gekennzeichnet, dass** die Beschleunigung des Ernteguts (22) durch eine Verstellung einer Drehzahl und/oder einer Schaufelstellung und/oder einer Luftzuführung des Nachbeschleunigers (5) steuerbar ist.

3. Erntemaschine nach Anspruch 1 oder 2, **dadurch gekennzeichnet, dass** die Steuerungseinrichtung (16) mit einer Einrichtung gekoppelt ist, welche die erzielte Wurfweite (d) erfasst.

4. Erntemaschine nach Anspruch 3, **dadurch gekennzeichnet, dass** die Einrichtung einen optischen Sensor (19) umfasst.

5. Erntemaschine nach einem der Ansprüche 1 bis 4, **dadurch gekennzeichnet, dass** der Erntemaschine ein Aktor (12) zur Höhenverstellung der Überladeeinrichtung (10) und/oder ein Aktor (13) zur Veränderung eines Abwurfwinkels der Überladeeinrichtung (10) und/oder ein Aktor zur Veränderung der Länge der Überladeeinrichtung (10) zugeordnet ist.

6. Erntemaschine nach einem der Ansprüche 1 bis 5, **dadurch gekennzeichnet, dass** dieser ein Sensor (14) zur Erfassung der Höhenstellung der Überladeeinrichtung (10) und/oder ein Sensor (15) zur Erfassung des Abwurfwinkels der Überladeeinrichtung (10) und/oder ein Sensor (14) zur Erfassung der Länge der Überladeeinrichtung (10) zugeordnet ist, wobei die Steuerungseinrichtung (16) Signale des jeweiligen Sensors (14, 15) empfängt.

7. Erntemaschine nach einem der Ansprüche 1 bis 6, **dadurch gekennzeichnet, dass** es sich bei dieser um einen selbstfahrenden Feldhäcksler (1) handelt.

8. Erntemaschine nach einem der Ansprüche 1 bis 7, **gekennzeichnet durch** eine mit der Steuerungseinrichtung (16) verbundene Betätigungseinrichtung (17) zum Aktivieren und Deaktivieren der Steuerungseinrichtung (16).

9. Verfahren zum Überladen von Erntegut (22) von einer landwirtschaftlichen Erntemaschine, insbesondere einer Erntemaschine (1) nach einem der Ansprüche 1 bis 8, in einen Ladebehälter (21), wobei das Erntegut (22) in der Erntemaschine (1) veränderbar beschleunigt und durch eine Überladeeinrichtung (10) mit einer Wurfweite (d) ausgeworfen wird,
**dadurch gekennzeichnet, dass**
es sich bei dem Förderorgan um einen Nachbeschleuniger (5) handelt, wobei die Beschleunigung des Ernteguts (22) durch eine Verstellung einer Spaltweite des Nachbeschleunigers (5) steuerbar ist, und
eine durch eine veränderte Beschleunigung verursachte Änderung der Wurfweite (d) des Ernteguts (22) durch eine Veränderung eines Zustands der Überladeeinrichtung (10) ausgeglichen wird.

10. Verfahren nach Anspruch 9, **dadurch gekennzeichnet, dass** die Beschleunigung des Ernteguts (22) manuell vom Maschinenbediener oder automatisiert verändert wird.

11. Verfahren nach Anspruch 9 oder 10, **dadurch gekennzeichnet, dass** im Rahmen einer Ablaufroutine die folgenden Verfahrensschritte durchlaufen werden:
a) Erkennen einer erzielten ursprünglichen Wurfweite (d),
b) Überprüfung, ob sich die erkannte Wurfweite (d) mit einer reduzierten Beschleunigung erzielen lässt, wobei im Fall von Reduzierungspotential die folgenden Maßnahmen erfolgen:
c) Vorgabe einer reduzierten Beschleunigung des Ernteguts (22),
d) Vorgabe eines veränderten Zustands der Überladeeinrichtung (10), um die ursprüngliche Wurfweite (d) zu erzielen.

12. Verfahren nach Anspruch 11, **dadurch gekennzeichnet, dass** die Schritte b) bis d) so häufig wiederholt werden, bis eine zur Erzielung der ursprünglichen Wurfweite (d) minimale Beschleunigung erreicht ist.

13. Verfahren nach Anspruch 11 oder 12, **dadurch gekennzeichnet, dass** die in den Verfahrensschritten c) und d) vorgesehenen Maßnahmen zur Vermeidung von Erntegutverlusten jeweils in festlegbaren Stellweiten vorgenommen werden.

14. Verfahren nach einem der Ansprüche 11 bis 13, **dadurch gekennzeichnet, dass** die in den Schritten c) und d) der Ablaufroutine vorgesehenen Vorgaben an einen Maschinenbediener ausgegeben werden.

15. Verfahren nach einem der Ansprüche 11 bis 14, **dadurch gekennzeichnet, dass** die Ablaufroutine nach einer Aktivierung durch den Maschinenbediener automatisch abläuft, indem die Steuerungseinrichtung (16) die in den Schritten c) und d) vorgegebenen Maschineneinstellungen selbsttätig vornimmt.

## Claims

1. An agricultural harvester (1) having at least one conveyor member (5) for variable acceleration of crop material (22) and a transloading device (10) arranged downstream of the conveyor member (5) for ejection of the crop material (22) into a loading container (21) wherein the transloading device (10) is variable in its state by means of at least one actuator (12, 13) to influence an achieved throwing distance (d),
**characterised in that**
the conveyor member is a post-acceleration device (5) wherein acceleration of the crop material (22) is controllable by an adjustment of a gap width of the post-acceleration device (5), and by
a control device (16) which is actuable to compensate for a change in the throwing distance (d) of the crop material (22), that is caused by varied acceleration of the crop material (22), by actuation of the at least one actuator (12, 13) of the transloading device (10).

2. A harvester according to claim 1 **characterised in that** the acceleration of the crop material (22) is controllable by an adjustment of a rotary speed and/or a blade position and/or an air feed of the post-acceleration device (5).

3. A harvester according to claim 1 or claim 2 **characterised in that** the control device (16) is coupled to a device which detects the achieved throwing distance (d).

4. A harvester according to claim 3 **characterised in that** the device includes an optical sensor (19).

5. A harvester according to one of claims 1 to 4 **characterised in that** associated with the harvester is an actuator (12) for height adjustment of the transloading device (10) and/or an actuator (13) for varying an ejection angle of the transloading device (10) and/or an actuator for varying the length of the transloading device (10).

6. A harvester according to one of claims 1 to 5 **characterised in that** associated therewith is a sensor (14) for detecting the height position of the transloading device (10) and/or a sensor (15) for detecting the ejection angle of the transloading device (10) and/or a sensor (14) for detecting the length of the transloading device (10), the control device (16) receiving signals from the respective sensor (14, 15).

7. A harvester according to one of claims 1 to 6 **characterised in that** it is a self-propelled forage harvester (1).

8. A harvester according to one of claims 1 to 7 **characterised by** an actuating device (17) connected to the control device (16) for activating and deactivating the control device (16).

9. A method of transloading crop material (22) from an agricultural harvester, in particular a harvester (1) according to one of claims 1 to 8, into a loading container (21), wherein the crop material (22) is variably accelerated in the harvester (1) and ejected by a transloading device (10) with a throwing distance (d),
**characterised in that**
the conveyor member is a post-acceleration device (5), wherein the acceleration of the crop material (22) is controllable by an adjustment of a gap width of the post-acceleration device (5), and
a change in the throwing distance (d) of the crop material (22), which is caused by a varied acceleration, is compensated by a variation in a state of the transloading device (10).

10. A method according to claim 9 **characterised in that** the acceleration of the crop material (22) is varied manually by the machine operator or in automated fashion.

11. A method according to claim 9 or claim 10 **characterised in that** the following method steps are performed in the course of an operating routine:
a) discerning an achieved original throwing distance (d),
b) checking whether the discerned throwing distance (d) can be achieved with a reduced acceleration, wherein in the case of reduction potential the following measures are implemented:
c) predetermining a reduced acceleration of the crop material (22), and
d) predetermining a varied state of the transloading device (10) to achieve the original throwing distance (d).

12. A method according to claim 11 **characterised in that** steps b) to d) are frequently repeated until a minimal acceleration for achieving the original throwing distance (d) is reached.

13. A method according to claim 11 or claim 12 **characterised in that** the measures implemented in method steps c) and d) for avoiding crop material losses are respectively implemented in definable adjusting widths.

14. A method according to one of claims 11 to 13 **characterised in that** the presettings implemented in steps c) and d) of the operating routine are output to a machine operator.

15. A method according to one of claims 11 to 14 **characterised in that** the operating routine takes place automatically after activation by the machine operator, by the control device (16) automatically effecting the machine settings predetermined in steps c) and d).

## Revendications

1. Machine de récolte agricole (1) comportant au moins un organe de transport (5) pour l'accélération variable d'un produit de récolte (22) et un dispositif de déchargement (10) placé après l'organe de transport (5) pour éjecter le produit de récolte (22) dans un réservoir de chargement (21), l'état du dispositif de déchargement (10) étant variable au moyen d'au moins un actionneur (12, 13) afin d'exercer une influence sur une portée d'éjection (d) atteinte, **caractérisée en ce que** l'organe de transport est un accélérateur de décharge (5), l'accélération du produit de récolte (22) pouvant être commandée par un réglage d'une largeur d'ouverture de l'accélérateur de décharge (5), et par
un dispositif de commande (16) qui peut être mis en oeuvre pour compenser une modification de la portée d'éjection (d) du produit de récolte (22) provoquée par une modification de l'accélération du produit de récolte (22) par la commande dudit au moins un actionneur (12, 13) du dispositif de déchargement (10).

2. Machine de récolte selon la revendication 1, **caractérisée en ce que** l'accélération du produit de récolte (22) peut être commandée par un réglage d'une vitesse de rotation et/ou d'une position de pale et/ou d'une amenée d'air de l'accélérateur de décharge (5).

3. Machine de récolte selon la revendication 1 ou la revendication 2, **caractérisée en ce que** le dispositif de commande (16) est couplé à un dispositif qui détecte la portée d'éjection (d) atteinte.

4. Machine de récolte selon la revendication 3, **caractérisée en ce que** le dispositif comprend un capteur optique (19).

5. Machine de récolte selon l'une des revendications 1 à 4, **caractérisée en ce qu'**un actionneur (12) pour régler en hauteur le dispositif de déchargement (10) et/ou un actionneur (13) pour modifier un angle d'éjection du dispositif de déchargement (10) et/ou un actionneur pour modifier la longueur du dispositif de déchargement (10) sont associés à la machine de récolte.

6. Machine de récolte selon l'une des revendications 1 à 5, **caractérisée en ce qu'**un capteur (14) pour détecter la position en hauteur du dispositif de déchargement (10) et/ou un capteur (15) pour détecter l'angle d'éjection du dispositif de déchargement (10) et/ou un capteur (14) pour détecter la longueur du dispositif de déchargement (10) sont associés à celle-ci, le dispositif de commande (16) recevant les signaux du capteur (14, 15) respectif.

7. Machine de récolte selon l'une des revendications 1 à 6, **caractérisée en ce que** celle-ci est une ensileuse automotrice (1).

8. Machine de récolte selon l'une des revendications 1 à 7, **caractérisée par** un dispositif d'actionnement (17) relié au dispositif de commande (16) pour activer et désactiver le dispositif de commande (16).

9. Procédé pour décharger un produit de récolte (22) d'une machine de récolte agricole, en particulier d'une machine de récolte (1) selon l'une des revendications 1 à 8, vers un réservoir de chargement (21), le produit de récolte (22) étant accéléré de manière variable dans la machine de récolte (1) et éjecté par un dispositif de déchargement (10) ayant une portée d'éjection (d), **caractérisé en ce que** l'organe de transport est un accélérateur de décharge (5), l'accélération du produit de récolte (22) pouvant être commandée par un réglage d'une largeur d'ouverture de l'accélérateur de décharge (5), et **en ce qu'**une modification de la portée d'éjection (d) du produit de récolte (22) provoquée par une modification de l'accélération est compensée par une modification d'un état du dispositif de déchargement (10).

10. Procédé selon la revendication 9, **caractérisé en ce que** l'accélération du produit de récolte (22) est modifiée manuellement par l'opérateur de la machine ou de façon automatisée.

11. Procédé selon la revendication 9 ou la revendication 10, **caractérisé en ce que**, dans le cadre d'une routine d'exécution, les étapes de procédé suivantes sont exécutées :
a) détection d'une portée d'éjection (d) initiale atteinte,
b) vérification que la portée d'éjection (d) détectée peut être atteinte avec une accélération réduite, les mesures suivantes étant prises en cas de potentiel de réduction :
c) prescription d'une accélération réduite du produit de récolte (22),
d) prescription d'un état modifié du dispositif de déchargement (10) pour atteindre la portée d'éjection (d) initiale.

12. Procédé selon la revendication 11, **caractérisé en ce que** les étapes b) à d) sont répétées jusqu'à ce qu'une accélération minimale pour atteindre la portée d'éjection (d) initiale soit atteinte.

13. Procédé selon la revendication 11 ou la revendication 12, **caractérisé en ce que** les mesures prévues dans les étapes de procédé c) et d) sont chaque fois prises dans des étendues de réglage définissables pour éviter des pertes de produit de récolte.

14. Procédé selon l'une des revendications 11 à 13, **caractérisé en ce que** les prescriptions prévues aux étapes c) et d) de la routine d'exécution sont délivrées à un opérateur de la machine.

15. Procédé selon l'une des revendications 11 à 14, **caractérisé en ce que** la routine d'exécution se déroule automatiquement après une activation par l'opérateur de la machine, le dispositif de commande (16) effectuant automatiquement les réglages de machine prescrits aux étapes c) et d).
